Europäisches Patentamt

**European Patent Office**

Office européen des brevets

(11) Veröffentlichungsnummer: **0 247 356 B1**

## EUROPÄISCHE PATENTSCHRIFT

(45) Veröffentlichungstag der Patentschrift: **09.10.91**

(51) Int. Cl.⁵: **A01G 9/14, E04B 2/88**

(21) Anmeldenummer: **87105881.4**

(22) Anmeldetag: **22.04.87**

(54) **Verglasung für Gewächshäuser, Wintergärten oder dergleichen sowie dabei verwendbare Glasscheibe.**

(30) Priorität: **15.05.86 DE 3616408**

(43) Veröffentlichungstag der Anmeldung:
**02.12.87 Patentblatt 87/49**

(45) Bekanntmachung des Hinweises auf die
Patenterteilung:
**09.10.91 Patentblatt 91/41**

(84) Benannte Vertragsstaaten:
**AT BE CH DE FR GB LI NL**

(56) Entgegenhaltungen:
**DE-A- 1 509 289**
**DE-A- 2 831 696**
**DE-C- 1 509 552**
**DE-U- 8 317 882**
**US-A- 4 307 551**

(73) Patentinhaber: **SOLVAR Systembaugesellschaft für solare variable Bausysteme GmbH**

**W-4650 Gelsenkirchen(DE)**

(72) Erfinder: **Markewitz, Wolfgang
Kieselei 13,
W-4060 Ratingen 6(DE)**
Erfinder: **Steinbach, Rainer**

**Diekschenbroich 17,
W-4300 Essen(DE)**
Erfinder: **Hammer, Manfred
Am Gerichtshaus 69
W-4300 Essen-Kupferdreh(DE)**
Erfinder: **Brambring, Bernd
Schuetzenstrasse 25
W-4250 Bottrop(DE)**
Erfinder: **Bolduan, Dietrich
Mergenhofweg 16,
W-4156 Willich 3(DE)**
Erfinder: **Reiss, Juergen
Leithestrasse 50,
W-4630 Bochum 6(DE)**

(74) Vertreter: **Goddar, Heinz J., Dr. et al
FORRESTER & BOEHMERT Widenmayerstrasse 4/I
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft eine Verglasung für Gewächshäuser, Wintergärten, Fassaden oder dergleichen nach dem einleitenden Teil des Patentanspruches 1 sowie eine dabei verwendbare Glasscheibe.

Aus der US-A-4 307 551 ist eine Verglasung dieser Art bekannt, bei der sich die Scheiben der Verglasung in einer parallel zur Scheibenebene liegenden Montagerichtung montieren lassen. Der Ausbau einer defekten Scheibe bzw., vor allem, der Einbau einer neuen Scheibe bei Beschädigung ist daher nur durch gesamten Abbau aller Scheiben möglich. Auch lassen sich die Scheiben bei der bekannten Konstruktion nicht quer zum Trag- bzw. Führungsprofil verschieben, sondern lediglich parallel hierzu, wobei eine endgültige Festlegung der Scheiben gegen Verschieblichkeit, wie sie zur Ableitung von Schubkräften zweckmäßig ist, bei der bekannten Verglasung nicht erfolgen kann.

Bei einer aus der DE-A-28 31 696 bekannten Verglasung ist ein Tragsystem aus vertikalen Tragprofilen einerseits und Quersprossen andererseits vorgesehen, wobei die einzelnen Glasscheiben, die beim Einbauen vorübergehend verklotzt werden müssen, entlang ihrer Querkanten ziegelartig ineinandergehängt werden. Der Aufbau derartiger Verglasungen ist, abgesehen von dem verhältnismäßig komplizierten Tragsystem, zeitraubend und nur durch erfahrenes Bedienungspersonal durchführbar.

Ein ähnliches Verglasungssystem zeigt beispielsweise die EP-A-0 153 547, bei der ebenfalls gitterartige Tragsysteme aus vertikalen Tragstützen und Quersprossen Verwendung finden und die Scheiben unter Verwendung entsprechender Querprofile gleichsam "ineinandergehängt" werden können, wobei aber die vorstehend beschriebenen Probleme ebenfalls nicht vermieden werden können. Die DE-C-1 509 552 betrifft ein Randprofil, bei dem Scheiben mit Klippsitz zur Herstellung von Tür- oder Fensterflügeln mit doppelt verglastem Rahmen eingesetzt werden können, jedoch ermöglichen derartige Tür- oder Fensterflügel nicht den Aufbai kompletter Verglasungen, wie sie insbesondere für Gewächshäuser oder Wintergärten Verwendung finden. Die DE-A-1 509 289 schließlich betrifft eine Halterung für Glasscheiben, bei der durch die ineinandergesetzten U-förmig zusammenpassenden Winkelprofile stets eine zuverlässige Halterung der Glasscheibe gewährleistet ist, jedoch lassen sich auch hiermit keine großflächigen Verglasungen der eingangs beschriebenen Art ohne die dort erläuterten Probleme aufbauen.

Der Erfindung liegt daher die Aufgabe zugrunde, eine Verglasung der gattungsgemäßen Art zu schaffen, welche bei geringstmöglichem Herstellungsaufwand ein einfaches, zuverlässiges Aufbauen auch durch unerfahrenes Bedienungspersonal bei gleichzeitig zuverlässiger Halterung der Einzelscheiben gewährleistet.

Erfindungsgemäß wird diese Aufgabe durch die im kennzeichnenden Teil des Patentanspruches 1 aufgeführten Merkmale gelöst. Die Patentansprüche 2 bis 16 betreffen vorteilhafte Weiterbildungen der erfindungsgemäßen Verglasung. Eine zur Verwendung bei der erfindungsgemäßen Verglasung geeignete Glasscheibe ist Gegenstand der Patentansprüche 17 bis 20.

Der Erfindung liegt die überraschende Erkenntnis zugrunde, daß es gelingt, die obengenannte Aufgabe zu lösen und ein paneelartiges Verglasungssystem zu schaffen, bei dem das Tragsystem keine Quersprossen zur Aufnahme und Lastableitung der Glasscheiben mehr aufzuweisen braucht, wenn die Glasscheiben in der beanspruchten Weise an ihren Längskanten "selbstjustierend" miteinander verbunden werden, wobei die "Selbstjutierung" dadurch erfolgt, daß beim Einbau der Glasscheiben mit den Randprofilen mit "Lehrencharakter" bzw. bei den entsprechenden Ausführungsformen bei Verwendung der Befestigungsnuten und Festlegevorsprünge mit "Lehrencharakter" automatisch die jeweilige Abstandssicherung unter seitlichem Verschieben der Glasscheiben relativ zu den Tragprofilen erfolgt. Die Montage ist schnell und einfach unter Verwendung kleiner, typisierter Elemente möglich, wobei die einzelnen Glasscheiben mit den seitlich angefügten Randprofilen unter Verwendung der entsprechenden Tragprofile durch einfaches Verbinden, gegebenenfalls durch Aufdrücken mit Klippsitz, gegen Zug und Druck gesichert werden können.

Es gelingt bei der Erfindung, in besonders zuverlässiger, einfach zu handhabender Weise ein dichtes und ästhetisch ansprechendes Verbinden der quersprossenfrei einanderliegenden Glasscheiben einer Verglasung der gattungsgemäßen Art zu erreichen, wenn Kantenprofile der nach der Erfindung vorgesehenen Art verwendet werden.

Nachstehend sind Ausführungsbeispiele der Erfindung anhand der schematischen Zeichnungen im einzelnen erläutert. Dabei zeigt:

Fig. 1  ein Ausführungsbeispiel einer Verglasung nach der Erfindung in der Ansicht;

Fig. 2  eine einzelne Glasscheibe der Verglasung von Fig. 1 mit Randprofilen im Schnitt senkrecht zur Scheibenebene;

Fig. 3  die Glasscheibe von Fig. 2 in der Draufsicht;

Fig. 4  einen Schnitt entlang der Linie IV-IV von Fig. 1 in vergrößertem Maßstab;

Fig. 5  einen Schnitt entlang der Linie V-V von Fig. 1 in nochmals vergrößerter Darstellung, wie bei Fig. 4 in Richtung der Pfeile gesehen;

Fig. 6　einen Schnitt entlang der Linie VI-VI, in Richtung der Pfeile gesehen, von Fig. 1;

Fig. 7　einen Knotenpunkt von vier aneinander anstoßenden Glasscheiben der ausschnittsweise in Fig. 1 gezeigten Verglasung in vergrößerter Draufsicht mit weiteren Details;

Fig. 8　ein abgewandeltes Ausführungsbeispiel eines Kelchprofiles der Verglasung nach der Erfindung in Fig. 5 entsprechender Schnittdarstellung;

Fig. 9　ein abgewandeltes Ausführungsbeispiel einer Längskantenverbindung nach der Erfindung in Fig. 5 entsprechender Schnittdarstellung, entsprechend der Schnittlinie IX-IX von Fig. 1;

Fig. 10　ein wiederum abgewandeltes Ausführungsbeispiel einer Längskantenverbindung der erfindungsgemäßen Verglasung in Fig. 9 entsprechender Schnittdarstellung, entsprechend der Schnittlinie X-X von Fig. 1;

Fig. 11　ein Ausführungsbeispiel einer geneigten Längskantenverbindung ähnlich dem Ausführungsbeispiel gemäß Fig. 9 oder Fig. 10, ebenfalls entsprechend der dort verwendeten Schnittdarstellung entsprechend der Schnittlinie XI-XI von Fig. 1;

Fig. 12　ein abgewandeltes Ausführungsbeispiel einer Längskantenverbindung nach der Erfindung ähnlich den Ausführungsbeispielen gemäß Fig. 9 bis 11, in der dort verwendeten entsprechenden Schnittdarstellung, jedoch entlang der Schnittlinie XII-XII von Fig. 1;

Fig. 13　einen Schnitt entlang der Linie XIII-XIII von Fig. 1, in Richtung der Pfeile gesehen;

Fig. 14　eine Schnittdarstellung entsprechend Fig. 13 entlang der Linie XIV-XIV von Fig. 1, jedoch bei einem geneigten Ausführungsbeispiel;

Fig. 15　eine Schnittdarstellung entsprechend Fig. 13 entlang der Linie XV-XV von Fig. 1, jedoch bei einem wiederum abgewandelten Ausführungsbeispiel;

Fig. 16　eine Schnittdarstellung entsprechend Fig. 14 entlang der Linie XVI-XVI von Fig. 1, jedoch bei einem wiederum abgewandelten Ausführungsbeispiel;

Fig. 17　eine Schnittdarstellung, senkrecht zur Scheibenebene, einer Glasscheibe nach der Erfindung mit umlaufendem Randprofil; und

Fig. 18　die Glasscheibe von Fig. 17 in der Draufsicht.

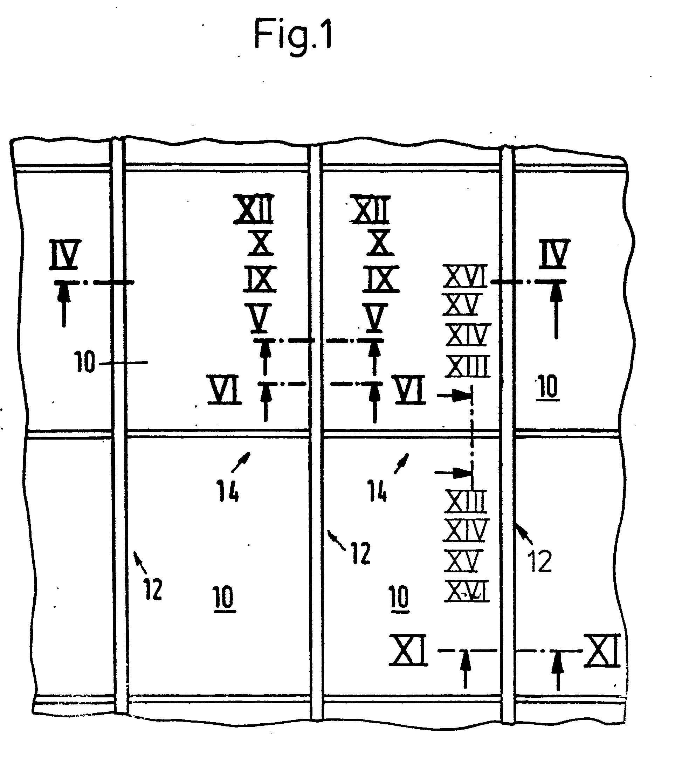

Wie Fig. 1 erkennen läßt, weist der dort gezeigte Ausschnitt eines Ausführungsbeispieles einer erfindungsgemäßen Verglasung, beispielsweise einer Gewächshaus- oder Wintergartenwand, Glasscheiben 10 auf, die an ihren vertikalen Längskanten über Tragprofile eines Tragsystems 12 und an ihren horizontalen Querkanten über weiter unten genauer beschriebene Dichtungsprofile 14 miteinander verbunden sind. Während das Tragsystem 12 in noch weiter zu beschreibender Weise gebäudefeste vertikale Tragstützen aufweist, weist es keinerlei Quersprossen auf, so daß die jeweils übereinander angeordneten Glasscheiben 10, bei denen es sich vorzugsweise um Isolierglasscheiben handelt, unter Zwischenschaltung der Dichtungsprofile 14 aneinanderliegen.

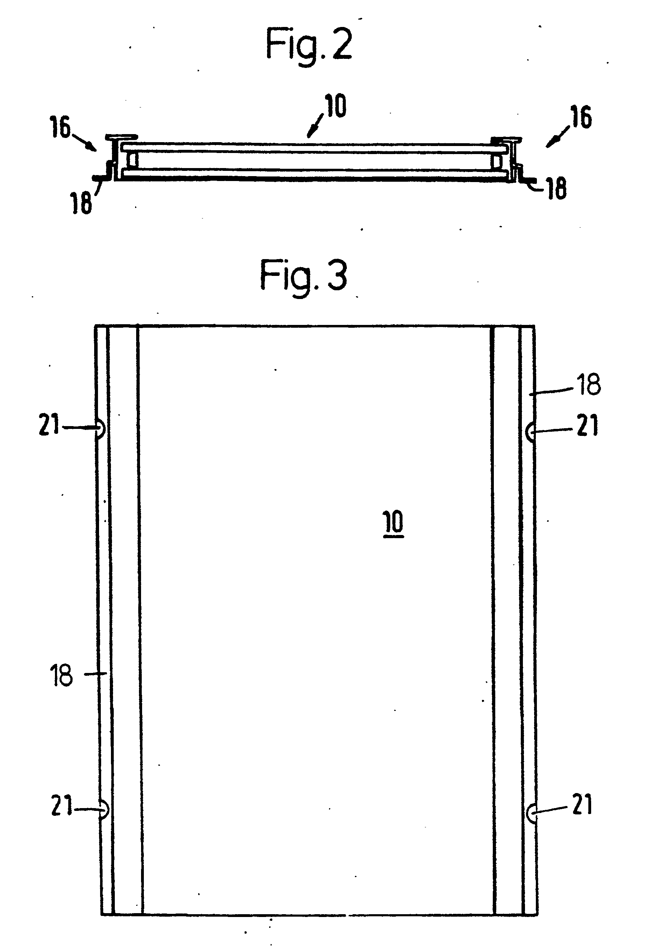

Wie Fig. 2 erkennen läßt, ist jede der Glasscheiben 10 werksseitig in ein Randprofil 16 eingebettet, dessen Einzelheiten noch weiter unten erläutert werden.

Fig. 3 läßt erkennen, daß die Glasscheibe 10 in zur Scheibenebene parallelen Vorsprüngen 18 der Randprofile 16 jeweils zwei Sicherungshalböffnungen 21 aufweist, deren Zweck weiter unten noch erläutert wird.

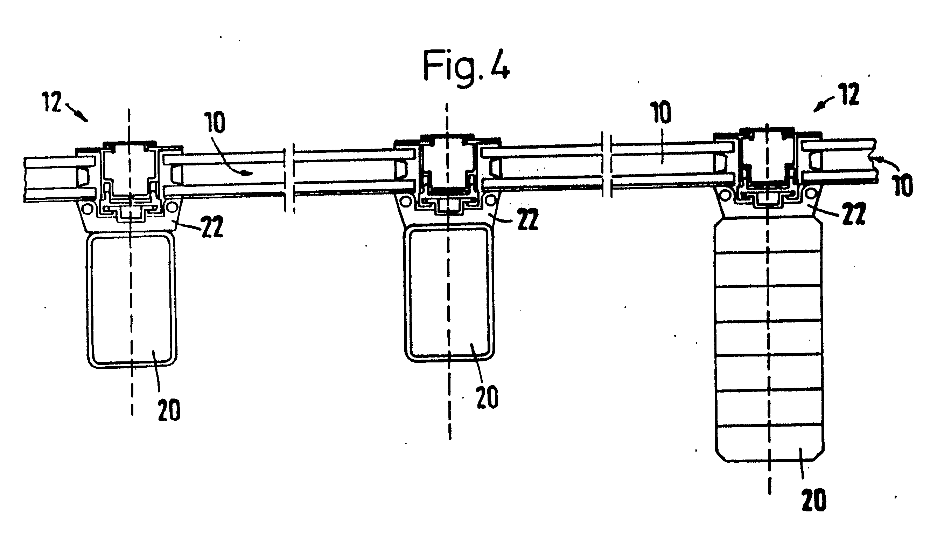

Fig. 4 zeigt in der Mitte sowie links zwei Tragstützen 20 in Form von Metall-Hohlprofilen und rechts eine Tragstütze 20 in Form einer Holzstütze, wobei die Randprofile 16 mit den Bestandteil des gebäudefesten Tragsystem bildenden Tragstützen 20 jeweils über Dichtungs- und Isolationsprofile 22 in Verbindung stehen. Unter "gebäudefest" ist dabei zu verstehen, daß die Tragstützen 20 gegebenenfalls natürlich auch insgesamt ohne weitere Hilfsmittel das gesamte Gebäudesystem bilden, wie dies beispielsweise bei Gewächshäusern oder Wintergärten der Fall sein kann, während beispielsweise bei Fassadenverglasungen von Gebäuden die Tragstützen 20 ihrerseits in bekannter Weise mit der Gebäudehaut oder dergleichen verbunden wären.

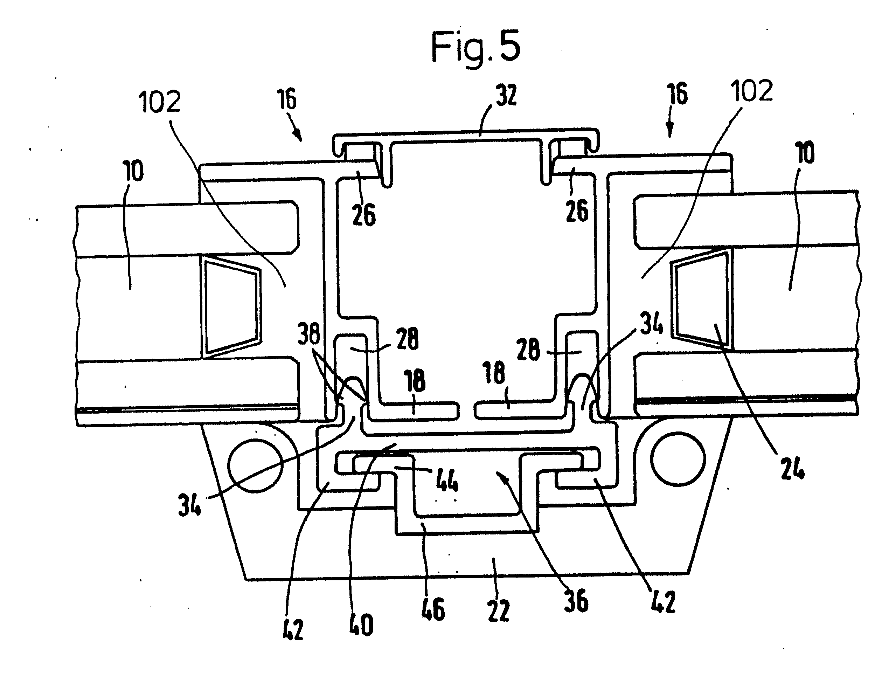

Wie Fig. 5 erkennen läßt, weist jede der Glasscheiben 10 zwei über einen Abstandhalter 24 in bekannter Weise mittels einer Dichtungsmasse 102 verbundene Einzelscheiben auf, von denen in Fig. 5 die unten gezeigte Einzelscheibe als Verbundsicherheitsglasscheibe ausgebildet ist. Der in Fig. 5 geschnittene Scheibenrand ist in das jeweilige Randprofil 16 eingebettet, wobei dies vorzugsweise werksseitig erfolgen kann. Das Randprofil 16 weist an seiner in Fig. 5 oben gezeigten Außenseite jeweils einen Klippflansch 26 auf, der langgestreckt ausgebildet ist, in der Ebene der Glasscheiben 10 liegt und sich parallel zur Scheibenkante erstreckt. An der dem Klippflansch 26 gegenüberliegenden Seite weist das Randprofil 16 eine Klippnut 28 und hieran anschließend einen zur Scheibenebene parallelen langgestreckten Vorsprung 18 auf. Auf die in Fig. 5 oben gezeigte Außenseite der benachbarten Randprofile 16 ist eine Abdeckleiste 32 aufgesteckt.

Das Randprofil 16 ist mit seinen Klippnuten 28 klemmend auf zwei zueinander parallele Klippvorsprünge 34 eines Kelchprofiles 36 aufgesteckt, die jeweils mit Klippwülsten 38 versehen sind. Es versteht sich, daß die Klippwülste 38 auch durch zusätzliche Profile gebildet werden können, die auf den Klippvorsprüngen 34 befestigt sind. Das Kelchprofil weist ferner ein im wesentlichen ebenes Zentralteil 40 sowie zwei U-förmige Randschienen 42 auf, die mit seitlichem Spiel formschlüssig Tragflansche 44 einer Führungsschiene 46 umfassen, die mit einem ebenen Stegteil im wesentlichen flächig mit dem Dichtungs- und Isolationsprofil 22 und über dieses mit der in Fig. 5 nicht gezeigten Tragstütze verbunden ist.

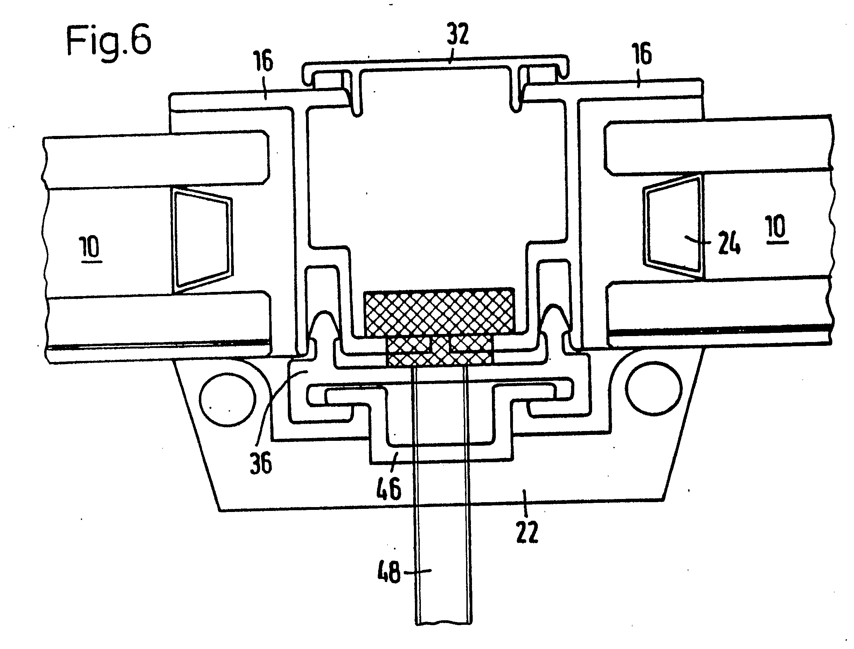

Fig. 6 läßt erkennen, auf welche Weise eine Sicherungsschraube 48 je zwei Sicherungshalböffnungen 21 zweier einander zugewandter Randprofile 16 durchsetzt und durch das Kelchprofil 36, das Stegteil der Führungsschiene 46 und das Dichtungs- und Isolationsprofil 22 hindurch mit der in Fig. 6 nicht gezeigten Tragstütze verbunden ist.

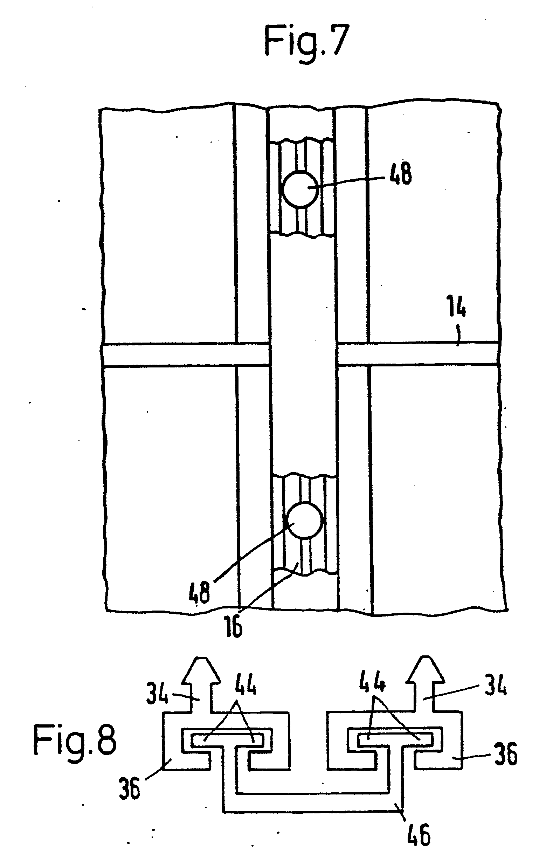

Fig. 7 läßt ebenfalls die Sicherungsschrauben 48 in den beiden Randprofilen 16 erkennen, ebenso wie das horizontale Dichtungsprofil 14.

Die vorstehend beschriebene Verglasung nach den Ausführungsbeispielen von Fig. 2 bis 7 wird wie folgt eingesetzt: Zunächst wird mit den Tragstützen 20 des vorher aufgebauten Tragsystems das Dichtungs- und Isolationsprofil 22 mit der Führungsschiene 46 verbunden. Auf die Führungsschiene 46 ist bzw. wird das Kelchprofil 36 aufgesteckt. Nachdem das Tragsystem auf diese Weise zum Einbau bzw. zum Zusammenbau der eigentlichen Verglasung vorbereitet worden ist, werden die einzelnen Glasscheiben 10 mit ihren Randprofilen 16 durch einfaches Anklippen auf den Kelchprofilen 36 mit ihren vertikalen Längsrändern befestigt, indem die Klippnuten 28 auf die Klippvorsprünge 34 mit ihren Klippwülsten 38 gedrückt werden. Dabei erfolgt durch die seitliche Verschiebbarkeit der Kelchprofile 36 bezüglich der Führungsschienen 46 eine Selbstjustierende, automatische Abstandseinstellung zwischen den einzelnen Glasscheiben 10, die auf diese Weise also beim Einbau selbstjustierenden, automatischen Lehrencharakter haben. Sobald die Verglasung auf diese Weise provisorisch fertiggestellt worden ist, werden die Glasscheiben 10 mittels der Sicherungsschrauben 48 gegen Verschieben in Längsrichtung gesichert, woraufhin die Abdeckleisten 32 aufgedrückt und die Verglasung damit fertiggestellt wird. In vorteilhafter Weise sind bei der erfindungsgemäßen Verglasung keine Quersprossen im Tragsystem zur Aufnahme und Lastableitung der Glasscheiben 10 erforderlich, wobei die notwendige Abstandssicherung zwischen den Tragprofilen 20 durch die beschriebene Selbstjustierung mit Lehrencharakter beim Einbau automatisch erfolgt. Die Montage ist schnell und einfach, wobei kleine, typisierte Bauelemente verwendet werden und das Klippsystem mit sofortiger Lagesicherung unmittelbar nach dem Einbau eine Verklotzung überflüssig macht. Durch die seitliche Verschiebbarkeit des Kelchprofils 36 ist ein automatischer Toleranzausgleich gewährleistet, während die U-förmig die Tragflansche 44 der Führungsschienen 46 umfassenden Randschienen 42 der Kelchprofile 36 die Glasscheiben 10 entlang der Längskanten gegen Zug und Druck senkrecht zur Scheibenebene zuverlässig sichern.

Das Ausführungsbeispiel gemäß Fig. 8 unterscheidet sich von dem vorstehend beschriebenen Ausführungsbeispiel gemäß Fig. 1 bis 7 dadurch, daß zwei separate, unabhängig voneinander querverschiebliche Kelchprofile 36 vorgesehen sind, wobei eines der Kelchprofile 36 auch fest mit der Führungsschiene 46 verbunden sein kann. Im übrigen ist zur vorteilhaften U- bzw. h-förmigen Ausbildung des Randprofils 16 der bei der erfindungsgemäßen Verglasung verwendeten Glasscheiben zu bemerken, daß diese infolge ihrer Form bei zur Gewächshausinnenseite gewandter Profilöffnung eine ausgezeichnete Feuchtigkeitsabdichtung etc. gewährleistet.

Die Einzelteile des erfindungsgemäß verwendeten Profilsystems bei den vorstehend beschriebenen Ausführungsbeispielen, also mit Randprofil, Abdeckleiste, Kelchprofil, Führungsschiene, Dichtungs- und Isolationsprofil, sind vorzugsweise als Kunststofformteile hergestellt, wobei insbesondere die elatischen Eigenschaften des Kunststoffes zur Realisierung der verwendeten Klippverbindung in vorteilhafter Weise beitragen.

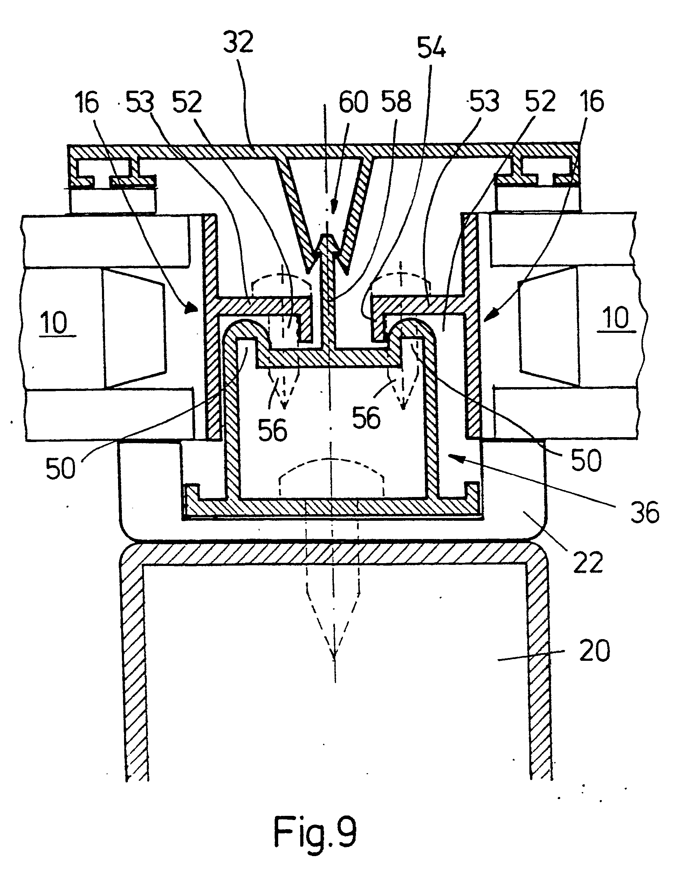

Bei dem in Fig. 9 gezeigten Ausführungsbeispiel ist das Kelchprofil 36 unter Zwischenschaltung eines auch hier vorgesehenen Dichtungs- und Isolationsprofiles 22 mit der Tragstütze 20 fest verschraubt. An seiner der Tragstütze 20 abgewandten Seite weist das Kelchprofil 36 zwei Festlegevorsprünge 50 auf, die abgerundet ausgebildet sind. Die Randprofile 16 der beiden Glasscheiben 10 sind mit Befestigungsnuten 52 versehen, welche durch den jeweiligen Vorsprung 53 und einen nahe dessen Ende in Richtung auf das Kelchprofil 36 vorstehenden Randvorsprung 54 gebildet sind. Die Länge der Vorsprünge 53 einerseits und die Breite der Befestigungsnuten 52 andererseits im Verhältnis zu den Festlegevorsprüngen 50 ist so gewählt, daß die Glasscheiben 10 nach dem Anlegen an das Kelchprofil 36 auf diesem in Fig. 9 gesehen nach links und rechts noch begrenzt frei zu Justierzwekken verschiebbar sind. Mittels jeweils einer Befestigungsschraube 56, die den Vorsprung 53 und den Festlegevorsprung 50 in der aus Fig. 9 schematisch ersichtlichen Weise durchsetzt, ist das Randprofil 16 mit dem Kelchprofil 36 nach erfolgtem Justieren der Scheibe endgültig verbindbar. Das Kelchprofil 36 weist etwa in der Mitte zwischen den Festlegevorsprüngen 50 einen zu der dem Tragprofil abgewandten Seite vorstehenden Zentralvorsprung 58 mit nahe seinem Ende vorgesehener Klipphinterschneidung 60 auf, auf den eine Abdeckleiste 32 aufklippbar ist. Bei dem Ausführungsbeispiel von Fig. 9 liegt die Abdeckleiste 32 dichtend an der Außenfläche der äußeren Scheibe der Glasscheiben 10 an.

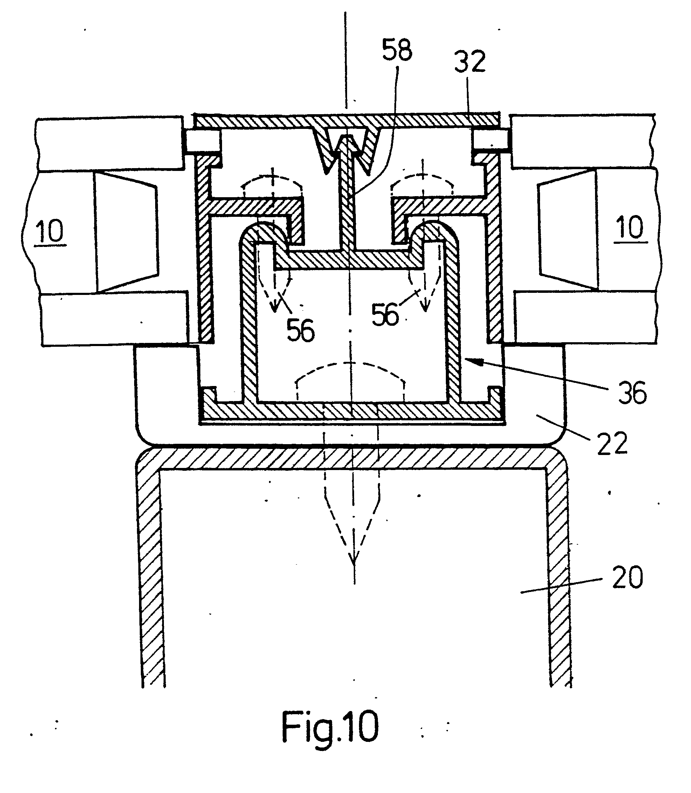

Bei dem in Fig. 10 gezeigten Ausführungsbeispiel ist im Unterschied zu dem in Fig. 9 gezeigten Ausführungsbeispiel vorgesehen, daß die Abdeckleiste 32 außen in etwa bündig mit der Außenfläche der Glasscheiben 10 abschließt, wobei die Befestigung bei dem dort gezeigten Ausführungsbeispiel im übrigen im wesentlichen sinngemäß derjenigen gemäß Fig. 9 entspricht.

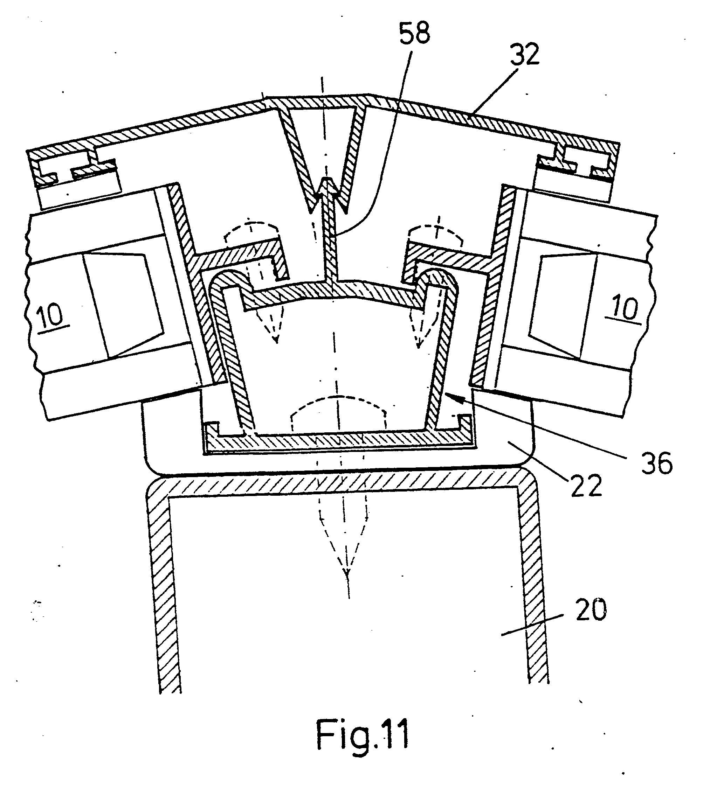

Bei dem in Fig. 11 gezeigten Ausführungsbeispiel sind, verglichen mit dem im übrigen ganz ähnlich aufgebauten Ausführungsbeispiel gemäß Fig. 9, die beiden Glasscheiben 10 schräg zueinander angeordnet, mit entsprechend "geneigter" Ausbildung des Kelchprofiles 36 sowie der Abdeckleiste 32.

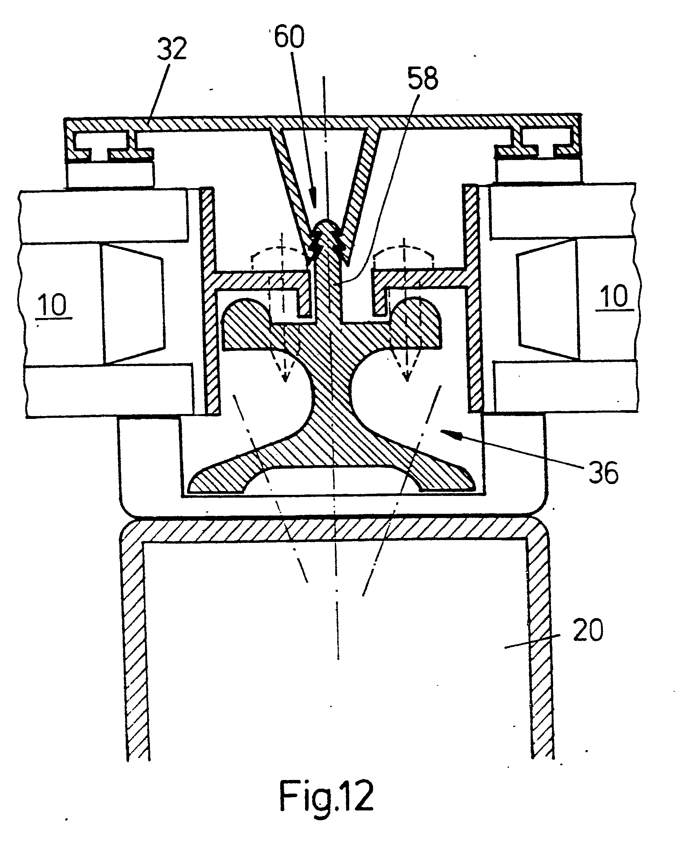

Schließlich unterscheidet sich das Ausführungsbeispiel gemäß Fig. 12 von den anhand der Fig. 9 bis 11 erläuterten Ausführungsbeispielen im wesentlichen einmal dadurch, daß das Kelchprofil 36 in seinem Querschnitt "X"-förmig ausgebildet ist, zum anderen dadurch, daß die Klipphinterschneidung 60 des Zentralvorsprunges 58 mehrstufig ausgebildet ist, mit entsprechender Ausbildung des Komplementärteiles der Abdeckleiste 32.

Auch bei Verwendung der Längskantenverbindung nach einem der Ausführungsbeispiele 9 bis 11 wird das Dichtungs- und Isolationsprofil 22 zusammen mit dem Kelchprofil 36 fest mit den Tragstützen 20 des vorher aufgebauten Tragsystems verbunden. Anschließend werden die Glasscheiben mit den Befestigungsnuten 52 auf die Festlegevorsprünge 50 aufgelegt und durch Querverschiebung justiert. Mittels der Befestigungsschrauben 56 erfolgt dann das Festlegen der Glasscheiben 10 gegenüber den Tragstützen 20. Anschließend wird die Abdeckleiste 32 auf den Zentralvorsprung 58 aufgesteckt, womit die Längskantenverbindung im Prinzip fertiggestellt ist. Natürlich können die verbleibenden Hohlräume der Profilelemente etc. gegebenenfalls mit Silikonmasse oder dergleichen ausgefüllt oder aber auch ausgeschäumt werden, obwohl dies grundsätzlich nicht notwendig ist.

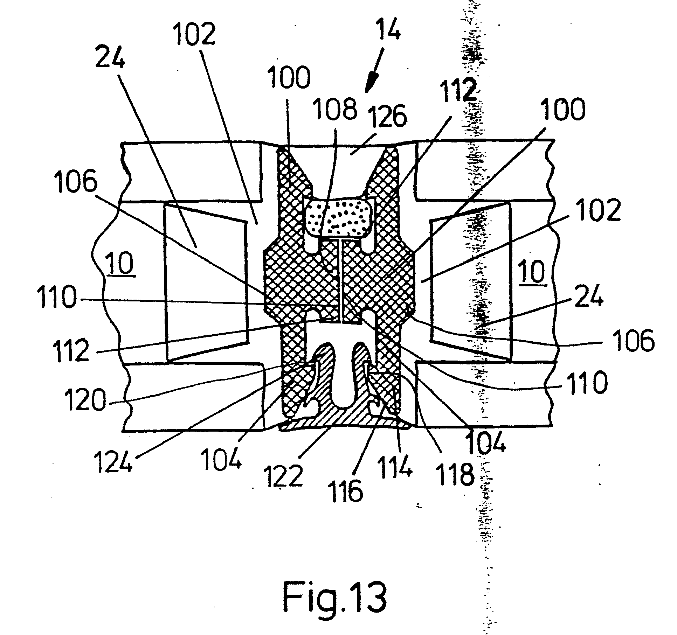

Wie Fig. 13 erkennen läßt, ist das Dichtungsprofil 14 bei dem dort gezeigten Ausführungsbeispiel in folgender Weise verwirklicht: Der Scheibenumfang jeder Glasscheibe 10, bei denen es sich jeweils bevorzugt um Isolierglasscheiben handelt, ist mit einem Kantenprofil 100 versehen, welches mittels einer Dichtungsmasse 102 mit den Einzelscheiben der jeweiligen Glasscheibe 10 sowie deren Abstandhalter 24 fest verbunden ist. Jedes der Kantenprofile 100 weist ein der jeweiligen Glasscheibe 10 zugewandtes Basisteils 104 auf, z. B. aus Aluminium oder Kunststoff im Stranggußverfahren hergestellt, welches in seinem bezüglich der Mittelebene der Glasscheiben 10 zentralen Bereich eine im Querschnitt gemäß der Darstellung von Fig. 13 im wesentlichen trapezförmige Verdickung 106 hat. Das Basisteil 104 erstreckt sich im wesentlichen über die gesamte Scheibendicke. Einstückig ausgebildet mit dem Basisteil 104 ist ein Stützteil 108, dessen dem Scheibenumfang abgewandte ebene Stirnfläche als Stützfläche 110 ausgebildet ist, so daß die beiden Stützflächen 110 bei der koplanaren Anordnung der Glasscheiben 10 gemäß Fig. 13 aneinander anliegen. Wie Fig. 13 weiterhin erkennen läßt, hat das Stützteil 108 eine wesentlich geringere Breite als das Basisteil 104 und ist mit flanschartigen Seitenvorsprüngen 112 versehen. Das Basisteil 104 weist an jedem seiner jeweils einer Scheibenaußenseite zugewandten Enden einen Befestigungsvorsprung 114 auf, wobei an jedem der Befestigungsvorsprünge 114 eine von der Scheibenaußenseite aus schräg nach innen vom Scheibenumfang weg verlaufende Schrägfläche 116 vorgesehen ist, an die in Richtung auf die Scheibenmittelebene eine im wesentlichen senkrecht zur Scheibenmittelebene und parallel zum Scheibenumfang verlaufende Übergangsfläche 118 und eine Hinterschneidung 120 anschließen.

In den Zwischenraum zwischen den beiden Kantenprofilen 100 ist, wie Fig. 13 zeigt, ein elastisches Innendichtprofil 122 eingesetzt, welches zwischen die Schrägflächen 116 der beiden Kantenprofile 100 eingeschoben ist und mit federnd vorspringenden Armen 124 die beiden Befestigungsvorsprünge 114 hintergreift, wodurch das Innendichtprofil 122, welches z. B. aus Weich-PVC bestehen kann, gehalten wird. An der dem Innendichtprofil 122 in Fig. 13 gegenüberliegenden Seite befindet sich eine Silikondichtung 126 und schließt den Zwischenraum zwischen den Kantenprofilen 100 dort ab, wobei insgesamt, wie auch bei den anderen Ausführungsbeispielen, wichtig ist, darauf hinzuweisen, daß das Dichtungsprofil 14 praktisch kräftefrei ist.

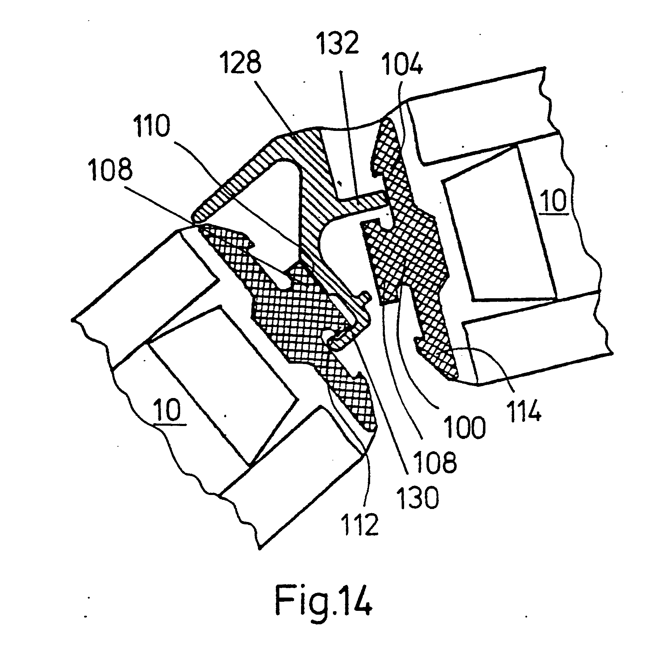

Beim Ausführungsbeispiel von Fig. 14 liegen die beiden Stützteile 108 der beiden dort gezeigten Glasscheiben 10 nicht aneinander an, vielmehr sind sie gegeneinander geneigt, entsprechend der zueinander schrägen Anordnung der beiden Glasscheiben 10. In den Zwischenraum zwischen den beiden Kantenprofilen 100 ist anstelle der Silikondichtung 126 ein Traufprofil 128 von der Scheibenaußenseite her eingesetzt, welches einen einen der Seitenvorsprünge 112 des einen Stützteiles 108 hintergreifenden und sich gleichzeitig auf dessen Stützfläche 110 abstützenden Haltearm 130 und einen sich an der Stirnfläche des anderen Basisteiles 104 abstützenden Stützarm 132 aufweist.

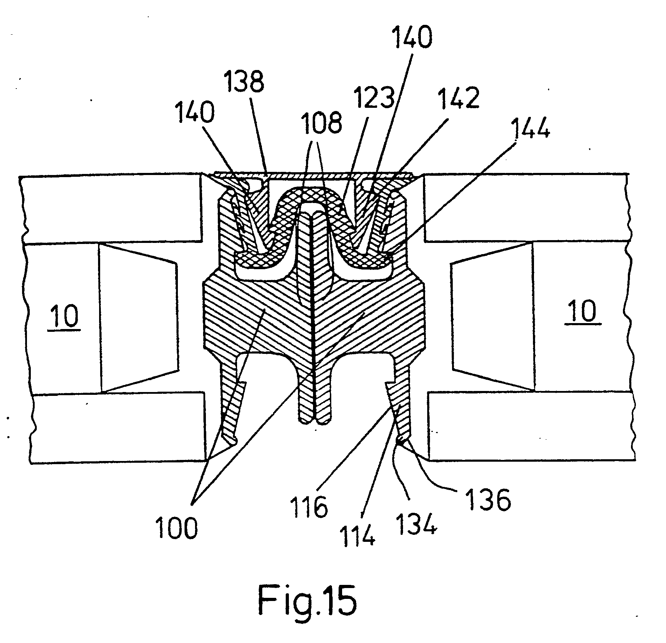

Beim Ausführungsbeispiel in Fig. 15 weist jeder der Befestigungsvorsprünge 114 des jeweiligen Kantenprofiles 100 nahe der jeweiligen Scheibenaußenseite einen über die Schrägflächenebene in Richtung vom Scheibenumfang fort vorstehenden Randvorsprung 134 auf. Das Basisteil ist im Bereich des Randvorsprunges 134 mit einer dem Scheibenumfang zugewandten Abschrägung 136 versehen. Das Dichtprofil 123 hat bei diesem Ausführungsbeispiel einen im wesentlichen W-förmigen Querschnitt, und ist mittels eines im wesentlichen starren Abdeckprofiles 138 mit zwei Klemmleisten 140 in den Zwischenraum zwischen den beiden Kantenprofilen 100 eingepreßt. Die Klemmleisten 140 weisen jeweils nahe der Scheibenaußenseite einen der Schrägfläche 116 des Basisteils 104 zugewandten Klemmvorsprung 142 und nahe ihrem der Scheibenmittelebene zugewandten Ende einen dem Stützteil 108 zugewandten Preßvorsprung 144 auf, wobei das Dichtprofil in der ohne weiteres aus Fig. 15 ersichtlichen Weise mit den Klemmvorsprüngen 142 bzw. Preßvorsprüngen 144 entsprechenden Hinterschneidungen ausgestattet ist. Bei diesem Ausführungsbeispiel besteht das Dichtprofil 123 im wesentlichen einheitlich aus federnd-elastischem Material, z. B. PVC, so daß es möglich ist, durch Eindrücken des starren Abdeckprofiles 138 das Dichtprofil 123 formschlüssig durch Hintergreifen der jeweiligen Vorsprünge etc. in die in Fig. 15 gezeigte Position zu bringen.

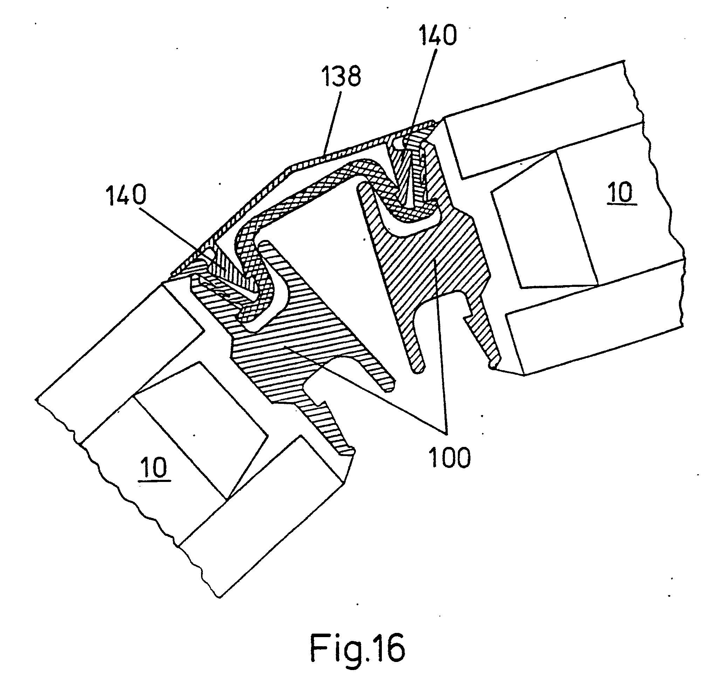

Das in Fig. 16 gezeigte Ausführungsbeispiel unterscheidet sich von dem in Fig. 15 wiedergegebenen im wesentlichen dadurch, daß hier das Abdeckprofil 138 entsprechend der geringen Neigung der beiden Glasscheiben 10 zueinander geknickt ausgebildet ist, wodurch auch die beiden Klemmleisten 140 eine zueinander geneigte Anordnung haben.

Bei allen beschriebenen Ausführungsbeispielen werden die Glasscheiben 10 zunächst mittels der entsprechenden Randprofile an den Tragprofilen des Tragsystems festgelegt. Anschließend läßt sich dann unter Verwendung der entsprechenden Dichtprofile 122, 123 bzw. Abdeckprofile 138 das Verbinden der einzelnen Glasscheiben 10 quersprossenfrei bewerkstelligen, wobei für eine glatte Außenfläche durch das entsprechend gestaltete Abdeckprofil 138 Sorge getragen ist. Es liegt im Ermessen des Fachmannes, die verbleibenden Zwischenräume zwischen den Kantenprofilen 100 bzw. den einzelnen Elementen der Dichtprofile 122, 123 bzw. Abdeckprofile 138 ggf. auszuschäumen oder ganz oder teilweise mit Silikonmasse oder dergleichen auszufüllen. Als Material eignen sich für die starren Bauteile, wie bereits gesagt, z. B. Aluminium oder Kunststoff, für die elastisch auszubildenden Elemente z. B. Silikongummi oder dergleichen.

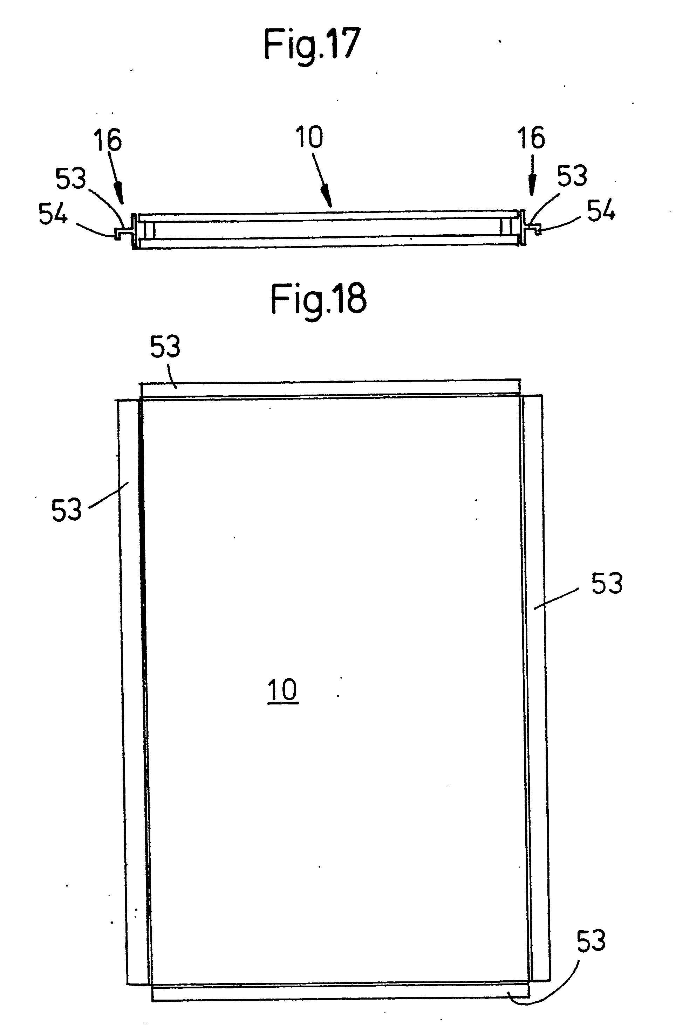

Hinsichtlich des Ausführungsbeispieles von Fig. 17 und 18, bei dem ein umlaufendes Randprofil in h-Form vorgesehen ist, sei darauf hingewiesen, daß dieses sich insbesondere dazu eignet, die Glasscheibe für Fassadengestaltungen im Sinne des "Silicon-Structural-Glazing" verwendbar zu machen. Die Verwendbarkeit der erfindungsgemäßen Glasscheibe ist auf diese Weise also nicht auf Gewächshäuser oder dergleichen beschränkt, sondern auch für derartige Fassadengestaltungen geeignet.

## Patentansprüche

1. Verglasung für Gewächshäuser, Wintergärten, Fassaden oder dergleichen, mit einer Vielzahl von im wesentlichen koplanar mit vertikalen Längskanten angeordneten Glasscheiben (10) - vorzugsweise Isolierglasscheiben -, deren Längs- und Querkanten dicht miteinander verbunden sind und die im Bereich ihrer Längskanten an Tragprofilen (20) eines Tragsystems (12) anliegen, wobei die Glasscheiben (10) an ihren Längskanten mit fest angefügten Randprofilen (16) versehen sind, die auf der den Tragprofilen (20) zugewandten Seite jeweils eine Befestigungsnut (28, 52) zum Herstellen einer form- und/oder kraftschlüssigen Verbindung mit Festlegevorsprüngen (34, 50) aufweisen, dadurch gekennzeichnet, daß an den Tragprofilen (20) festlegbar Kelchprofile (36) gelagert sind, die an der den Tragprofilen (20) abgewandten Seite die Festlegevorsprünge (34, 50) aufweisen, wobei die Glasscheiben (10) vor dem Herstellen der endgültigen Verbindung gegenüber den Tragprofilen (20) in zu den Längskanten senkrechter und zur Scheibenebene paralleler Richtung querverschiebbar und alsdann diesen gegenüber festlegbar sind.

2. Verglasung nach Anspruch 1, dadurch gekennzeichnet, daß die Kelchprofile (36) und/oder die Randprofile (16) sich jeweils durchgehend im wesentlichen über die gesamte Kantenerstreckung mindestens einer Glasscheibe (10) erstrecken.

3. Verglasung nach Anspruch 1 oder 2, dadurch gekennzeichnet, daß die Tragprofile (12) jeweils ein Kelchprofil (36) in zwei parallelen Festlegevorsprüngen (34, 50) zum Verbinden mit den Randprofilen (16) zweier benachbarter Glasscheiben (10) tragen.

4. Verglasung nach einem der vorangehenden Ansprüche, dadurch gekennzeichnet, daß die Randprofile (16) einen im wesentlichen zur Ebene der Glasscheibe (10) parallelen Vorsprung (18, 53) aufweisen.

5. Verglasung nach einem der vorangehenden Ansprüche, dadurch gekennzeichnet, daß das Kelchprofil (36) mit dem Tragprofil (12) kraft- und/oder formschlüssig verbindbar ist; daß die Befestigungsnut (52) in zu den Längskanten der Glasscheibe (10) senkrechter und zur Scheibenebene paralleler Richtung eine größere Breite als der jeweilige Festlegevorsprung (50) hat; und daß das Randprofil (16) vor dem Herstellen der endgültigen Verbindung mit dem Kelchprofil (36) in zur Scheibenebene paralleler und zur Längskante der Glasscheibe (10) senkrechter Richtung relativ zu dem Kelchprofil (36) verschiebbar ist.

6. Verglasung nach Anspruch 4 oder 5, dadurch gekennzeichnet, daß die Befestigungsnut (52) durch den Vorsprung (53) und einen nahe dessen Ende in Richtung auf das Kelchprofil (36) vorstehenden Randvorsprung (54) gebildet ist.

7. Verglasung nach Anspruch 6, dadurch gekennzeichnet, daß das Randprofil (16) mit dem Kelchprofil (36) mittels einer den Vorsprung (18, 53) und den Festlegevorsprung (50) durchsetzenden Befestigungsschraube (56) fest verbindbar ist.

8. Verglasung nach einem der Ansprüche 5 bis 7, dadurch gekennzeichnet, daß das Kelchprofil (36) etwa in der Mitte zwischen den Festlegevorsprüngen (50) einen zu der dem Tragprofil (12) abgewandten Seite vorstehenden Zentralvorsprung (58) mit nahe seinem Ende vorgesehener Klipphinterschneidung (60) aufweist, auf den eine Abdeckleiste (32) aufklippbar ist.

9. Verglasung nach einem der Ansprüche 1 bis 4, dadurch gekennzeichnet, daß das Kelchprofil (36) an dem Tragprofil (12) querverschieblich gelagert ist; daß die Festlegevorsprünge als Klippvorsprünge (34) ausgebildet sind; daß die Befestigungsnuten als Klippnuten (28) zum Herstellen einer Klippverbindung durch Aufdrücken auf einen der Klippvorsprünge (34) ausgebildet sind; und daß die Tragprofile (12) jeweils zwei zueinander im wesentlichen parallele, unabhängig voneinander querverschiebliche Kelchprofile (36) mit jeweils einem Klippvorsprung (34) zum Aufdrücken des Randprofiles (16) jeweils einer von zwei benachbarten Glasscheiben (10) tragen.

10. Verglasung nach einem der vorangehenden Ansprüche, dadurch gekennzeichnet, daß die Tragprofile (12) mit dem Tragsystem unter Zwischenschaltung eines Dichtungs- und Isolationsprofiles (22) verbunden sind.

11. Verglasung nach einem der vorangehenden Ansprüche, dadurch gekennzeichnet, daß die Glasscheiben (10) an ihren Querkanten mit Kantenprofilen (100) versehen sind, die ein sich im wesentlichen über die gesamte Scheibendicke erstreckendes Basisteil (104) mit auf mindestens einer Scheibenseite vorgesehenem Befestigungsvorsprung (114) und ein einstückig hiermit ausgebildetes Stützteil (108) geringerer Breite aufweisen, dessen zur Scheibenebene im wesentlichen senkrechte Stirnfläche als Stützfläche (110) für ein benachbartes Kantenprofil (100) ausgebildet und mit Abstand von der dem Scheibenumfang abgewandten Begrenzungsfläche nebst Befestigungsvorsprung (114) des Basisteils (104) angeordnet ist.

12. Verglasung nach Anspruch 11, dadurch gekennzeichnet, daß auf beiden Scheibenseiten jeweils ein Befestigungsvorsprung (114) vorgesehen ist.

13. Verglasung nach Anspruch 11 oder 12, dadurch gekennzeichnet, daß das Dichtprofil (123) einen im wesentlichen W-förmigen Querschnitt aufweist und mittels eines im wesentlichen starren Abdeckprofiles (138) mit zwei Klemmleisten (140) in den Zwischenraum zwischen den jeweils beiden einander zugewandten Kantenprofilen (100) eingepreßt ist.

14. Verglasung nach Anspruch 13, dadurch gekennzeichnet, daß die Klemmleisten (140) jeweils nahe der Scheibenaußenseite einen der Schrägfläche (116) des Basisteiles (104) zugewandten Klemmvorsprung (142) und nahe ihrem der Scheibenmittelebene zugewandten Ende einen dem Stützteil (108) zugewandten Preßvorsprung (144) aufweist.

15. Verglasung nach Anspruch 14, dadurch gekennzeichnet, daß das Dichtprofil (123) den Klemm- (142) und Preßvorsprüngen (144) entsprechende Hinterschneidungen aufweist.

16. Verglasung nach einem der Ansprüche 13 bis 15, gekennzeichnet durch ein von der Außenseite von zwei geneigt zueinander angeordneten Glasscheiben (10) in den Zwischenraum zwischen den beiden Kantenprofilen (100) eingreifendes Traufprofil (128), welches einen einen der Seitenvorsprünge (112) des einen Stützteiles (108) hintergreifenden und sich gleichzeitig auf dessen Stützfläche (110) abstützenden Haltearm (130) und einen sich an der Stirnfläche des anderen Basisteiles (104) abstützenden Stützarm (132) aufweist.

17. Glasscheibe zur Verwendung bei der Verglasung nach einem der vorangehenden Ansprüche, gekennzeichnet durch ein entlang wenigstens einer der Scheibenkanten vorgesehenes im wesentlichen U-förmiges, zu einer Scheibenfläche offenes und mit einem Schenkel am Scheibenrand anliegendes Randprofil (16).

18. Glasscheibe nach Anspruch 17, dadurch gekennzeichnet, daß das Randprofil (16) im wesentlichen h-förmig ausgebildet ist.

19. Glasscheibe nach Anspruch 17 oder 18, dadurch gekennzeichnet, daß das Randprofil (16) im wesentlichen entlang des gesamten Umfanges der Glasscheibe (10) vorgesehen ist.

20. Glasscheibe nach Anspruch 17 oder 18, gekennzeichnet durch entlang zweier einander gegenüberliegender Längskanten vorgesehene Randprofile (16) zur Befestigung an entsprechenden Tragprofilen (12) eines Tragsystems und durch entlang der beiden hierzu senkrecht verlaufenden Querkanten vorgesehene Kantenprofile (100) zum Verbinden der jeweiligen Querkanten.

**Claims**

1. Glazing for greenhouses, conservatories, facades or the like, the glazing having a number of preferably insulating glass panes (10), arranged to be substantially coplanar with their long edges vertical, the long edges and transverse edges of the panes being sealingly interconnected, the panes (10) engaging by way of their long edges with section members (20) of a support system (12), the panes (16) having on their long edges fixedly attached edge section members (16) each formed on the side near the support section members (20) with a securing groove (28, 52) to enter into a positive and/or non-positive connection with fixing projections (34, 50), characterised in that dished section members (36) are mounted locatably on the support section members (20) and have the locating or fixing projections (34, 50) on the side remote from the support section members (20), and before their final connection the panes (10) are first movable transversely relatively to the support section members (20) in a direction perpendicular to the long edges and parallel to the plane of the pane, and then fixable relatively to the latter edges.

2. Glazing according to claim 1, characterised in that the dished section members (36) and/or the edge section members (16) each extend continuously substantially over the whole extent of the edges of at least one pane (10).

3. Glazing according to claim 1 or 2, characterised in that the support section members (12) each carry a dished section member (36) in two parallel fixing projections (34, 50) for connection to the edge section members (16) of two adjacent panes (10).

4. Glazing according to any of the previous claims, characterised in that the edge section members (16) have a projection (18, 43) substantially parallel to the pane plane.

5. Glazing according to any of the previous claims, characterised in that the dished section member (36) can be connected non-positively and/or positively to the support section member (12), the securing groove (52) is wider than the respective fixing projection (50) in a direction perpendicular to the long edges of the pane and parallel to the pane plane, and before the final connection to the dished section member (36) the edge section member (16) is movable relatively to the dished section member (36) in a direction parallel to the pane plain and perpendicular to the pane long edge of the pane.

6. Glazing according to claim 4 or 5, characterised in that the fixing groove (52) is formed by the projection (53) and an edge projection (54) which projects near the end of the projection (53) towards the dished section member (36).

7. Glazing according to claim 6, characterised in that the edge section member (16) can be rigidly connected to the dished section member (36) by way of a securing screw (56) which extends through the projections (18, 53, 50).

8. Glazing according to any of claims 5 to 7, characterised in that the dished section member (36) has substantially centrally between the fixing projections (50) a central projection (58) which projects to the side remote from the support section member (12) and which is formed near its end with a clip relief (60) to which a cover strip (32) can be clipped.

9. Glazing according to any of claims 1 to 4, characterised in that the dished section member (36) is mounted on the support section member (12) for transverse movement, the fixing projections are in the form of clip projections (34), the fixing grooves are in the form of clip grooves (28) to enable a clip connection to be produced by pressing on one of the clip projections (34), and the support section members (12) each support two substantially parallel dished section members (36) which are movable transversely independently of one another and which each have a clip projection (34) for pressing on the edge section member (16) of one of two adjacent panes (10).

10. Glazing according to any of the previous claims, characterised in that the support section members (12) are connected to the support system with the interposition of a sealing and insulating section member (22).

11. Glazing according to any of the previous claims, characterised in that the panes (10) have on their transverse edges edge section members (100) which have a base part (104), the same extending substantially over the whole thickness of the pane and having on at least one side thereof a fixing projection (114) and, unitary therewith, a narrower support part (108), the end face thereof which extends substantially perpendicularly to the pane plane being effective as support surface (110) for an adjacent edge section member (100), the latter end face being disposed at a distance from that boundary surface and fixing projection (114) of the base part (104) which is remote from the pane periphery.

12. Glazing according to claim 11, characterised in that a fixing projection (114) is provided on each of the two sides of the pane.

13. Glazing according to claim 11 or 12, characterised in that the sealing section member (123) is of substantially W-shaped cross-section and by means of a substantially rigid cover section member (138) having two clamping strips (140) is pressed into the gap between any two edge section members (100) which are near one another.

14. Glazing according to claim 13, characterised in that the clamping strips (140) each have near the outside of the pane a clamping projection (142) near the inclined surface (116) of the base part (104) and near their end near the pane centre-plane a pressing projection (144) near the support part (108).

15. Glazing according to claim 14, characterised in that the sealing section member (123) has relieved parts corresponding to the clamping projection (142) and pressing projection (144).

16. Glazing according to any of claims 13 to 15, characterised by a gutter section member (128) which extends from the outside of two panes (10) disposed at an inclination to one another into the gap between the two edge section members (100), the gutter section member (128) having: a retaining arm (130) which engages behind one of the side projections (112) of one support part (108) and also bears on the support surface (110) of the support part (108); and a support arm (132) bearing on the end face of the other base part (104).

17. A pane of use in glazing as set out in the previous claims, characterised by an edge section member (16) which is provided along at least one of the pane edges, is substantially U-shaped, is open towards one surface of the pane and engages with the edge thereof by way of an arm.

18. A pane according to claim 17, characterised in that the edge section member (16) is substantially h-shaped.

19. A pane according to claim 17 or 18, characterised in that the edge section member (16) is provided substantially along the entire periphery of the pane (10).

20. A pane according to claim 17 or 18, characterised by: edge section members (16) which are disposed along two opposite long edges and which are adapted to be secured to corresponding support section members (12) of a support system; and edge section members (100) which are disposed along the two transverse edges perpendicular to the last-mentioned long edges and which are adapted to interconnect such transverse edges.

**Revendications**

1. Vitrage pur serres, jardins d'hiver, façades ou analogues, comportant un grand nombre de vitres (10), de préférence des vitres isolantes, disposées sensiblement de manière coplanaire avec leurs bords longitudinaux verticaux, dont les bords de direction longitudinale et transversale sont reliés entre-eux de manière étanche et qui s'appuient au niveau de leurs bords longitudinaux sur des profilés support (20) d'un système de support (12), les vitres (10) étant munies sur leurs bords longitudinaux, de profilés de bordure (16) qui y sont rapportés de manière fixe, et qui présentent chacun, sur le côté tourné vers les profilés support (20), une rainure de fixation (28, 52) pour la réalisation d'une liaison par complémentarité de formes et/ou pur adhérence avec des protubérances de fixation (34, 50), caractérisé en ce que sur les profilés support (20) sont montés, de manière à pouvoir y étre fixés, des profilés on forme de coupe (36) qui, sur le côte opposé à celui adjacent aux profilés support (20), comportent les protubérances de fixation (34, 50), les vitres (10) étant, avant l'établissement de la liaison définitive, susceptibles de coulisser transversalement par rapport aux profilés support (20), dans une direction perpendiculaire aux bords longitudinaux et parallèle au plan de la vitre, pour pouvoir ensuite être fixées par rapport à ceux-ci.

2. Vitrage selon la revendication 1, caractérisé en ce que les profilés en forme de coupe (36) et/ou les profilés de bordure (16) s'étendent chacun de manière continue, sur sensiblement la totalité de la longueur du bord d'au moins une vitre (10).

3. Vitrage selon la revendication 1 ou 2, caractérisé en ce que les profilés support (12) portent chacun un profilé en forme de coupe (36) comportant deux protubérances de fixation (34, 50) parallèles, pour la liaison avec les profilés de bordure (16) de deux vitres (10) voisines.

4. Vitrage selon l'une des revendications précédentes, caractérisé en ce que les profilés de bordure (16) présentent une protubérance (18, 53) sensiblement parallèle au plan de la vitre (10).

5. Vitrage selon l'une des revendications précédentes, caractérisé en ce que la profilé en forme de coupe (36) peut être relié au profilé support (12) par adhérence et/ou complémentarité de formes, en ce que la rainure de fixation (52) présente, dans la direction perpendiculaire aux bords longitudinaux de la vitre (10) et parallèle au plan de la vitre, une largeur plus grande que la protubérance de fixation (50) respective, et on ce que le profilé de bordure (16), avant l'établissement de la liaison definitive avec le profilé en forme de coupe (36), peut être déplacé par rapport au profilé en forme de coupe (36), dans une direction parallèle au plan de la vitre et perpendiculaire au bord longitudinal de la vitre (10).

6. Vitrage selon la revendication 4 ou 5, caractérisé en ce que la rainure de fixation (52) est formée par le protubérance (53) et, à proximité de l'extrémité de celle-ci, par une protubérance de bordure (54) en saillie en direction du profilé en forme de coupe (36).

7. Vitrage selon la revendication 6, caractérisé en ce que le profilé de bordure (16) peut être lié de manière fixe au profilé en forme de coupe (36), au moyen d'une vis de fixation (56) traversant la protubérance (18, 53) et la protubérance de fixation (50).

8. Vitrage selon l'une des revendications 5 à 7, caractérisé en ce que le profilé en forme de coupe (36) comporte, environ au centre entre les protubérances de fixation (50), une protubérance centrale (58) en saillie vers le côte éloigné du profilé support (12) et comportant à proximité de son extrémité, une contre-dépouille d'encliquetage (60) sur laquelle peut venir s'encliqueter une baguette formant couvre-joint (32).

9. Vitrage selon l'une des revendications 1 à 4, caractérisé en ce que le profilé en forme de coupe (36) est monté de manière à pouvoir coulisser transversalement sur le profilé support (12), en ce que les protubérances de fixation sont réalisées sous la forme de protubérances d'encliquetage (34), en ce que les rainures de fixation sont réalisées sous la forme de rainures d'encliquetage (28) pour réaliser une liaison par encliquetage par application sous pression sur l'une des protubérances d'encliquetage (34), et en ce que les profilés support (12) portent chacun deux profilés en forme de coupe (36) sensiblement parallèles entre-eux, susceptibles de coulisser transversalement entre-eux indépendamment l'un de l'autre, et comportant chacun une protubérance d'encliquetage (34) pour l'application par pression du profilé de bordure (16) d'une de deux vitres (10) voisines.

10. Vitrage selon l'une des revendications précédentes, caractérisé en ce que les profilés support (12) sont assemblés au système de support avec interposition d'un profilé d'étanchéité et d'isolation (22).

11. Vitrage selon l'une des revendications précédentes, caractérisé en ce que les vitres (10) sont munies sur leurs bords transversaux de profilés de lisière (100) qui présentent une partie de base (104) s'étendant sensiblement sur la totalité de l'épaisseur de la vitre et comportant au moins sur une face de la vitre, une protubérance de fixation (114), ainsi qu'une partie d'appui (108) de plus faible largeur, formée d'un seul tenant avec la partie de base, et dont la face frontale sensiblement perpendiculaire au plan de la vitre est réalisée sous la forme d'une surface d'appui (110) pour un profilé de lisière (100) voisin et est disposée à côté de la protubérance de fixation (114), à distance de la surface de délimitation opposée à celle adjacente à la périphérie de la vitre, de la partie de base (104).

12. Vitrage selon la revendication 11, caractérisé en ce que sur chacune des deux faces de la vitre, est prévue une protubérance de fixation (114).

13. Vitrage selon la revendication 11 ou 12, caractérisé on ce que le profilé d'étanchéité (123) présente une section droite sensiblement en forme "w" et est introduit sous pression dans l'espace intermédiaire entre les deux profilés de lisière (100) respectivement adjacents, au moyen d'un profilé sensiblement rigide formant couvre-joint (138) et comportant deux baguettes de serrage (140).

14. Vitrage selon la revendication 13, caractérisé en ce que les baguettes de serrage (140) comportent chacune à proximité de la face extérieure de la vitre, une protubérance de serrage (142) faisant face à la surface inclinée (116) de la partie de base (104), et à proximité de son extrémité située au niveau du plan médian de la vitre, une protubérance de pression (144) faisant face à la partie d'appui (108).

15. Vitrage selon la revendication 14, caractérisé en ce que le profilé d'étanchéité (123) comporte des contre-dépouilles correspondant aux protubérances de serrage (142) et de pression (144).

16. Vitrage selon l'une des revendications 13 à 15, caractérisé par un profilé en forme de gouttière (128) s'engageant, à partir de la face extérieure de deux vitres (10) agencées angulairement entre-elles, dans l'espace libre entre les deux profilés de lisière (100), le profilé en forme de gouttière présentant une branche de maintien (130) s'engageant derrière l'une des protubérances laterales (112) de l'une des parties d'appui (108) en s'appuyant simultanément sur la surface d'appui (110) de celle-ci, ainsi qu'une branche d'appui (132) s'appuyant sur la face frontale de l'autre partie de base (104).

17. Vitre destinée à être utilisée pour la réalisation d'un vitrage selon l'une des revendications précédentes, caractérisée par un profilé de bordure (16) prévu sur au moins l'un des bords de la vitre, sensiblement en forme de "U", ouvert en direction de l'une des faces de la vitre, et appliqué sur le bord de la vitre par une branche de profilé.

18. Vitre selon la revendication 17, caractérisée en ce que le profilé de bordure (16) présente sensiblement une forme de "h".

19. Vitre selon la revendication 17 ou 18, caractérisée on ce que le profilé de bordure (16) est prévu sensiblement le long de la totalité de la périphérie de la vitre (10).

20. Vitre selon la revendication 17 ou 18, caractérisée par deux profilés de bordure (16) prévus sur deux bords longitudinaux opposés et destinés à la fixation sur des profilés support (12) d'un système de support, et par des profilés de lisière (100) prévus le long des bords transversaux perpendiculaires aux précédents et destinés à relier des bords transversaux respectifs.

# Fig.1

# Fig.2

# Fig.3

Fig. 4

14

Fig.5

Fig.6

16   32   16

10   24   10

36   46   22

48

EP 0 247 356 B1

# Fig.7

# Fig.8

Fig.9

Fig.10

Fig.11

32    60    58

10                                    10

36

20

Fig.12

Fig.13

Fig.14

Fig.15

Fig.16

# Fig.17

# Fig.18